# EUROPÄISCHE PATENTSCHRIFT

(11) **EP 0 658 376 B1**
(45) Veröffentlichungstag und Bekanntmachung des Hinweises auf die Patenterteilung: **15.01.1997**
(21) Anmeldenummer: 94115103.7
(22) Anmeldetag: 26.09.1994
(51) Int. Cl.: B01L 9/00, F16M 13/00

(54) **Laborgerät mit Haltevorrichtung**
laboratory apparatus with holding device
appareil de laboratoire avec support

(30) Priorität: 17.12.1993 DE 4343280
(43) Veröffentlichungstag der Anmeldung: 21.06.1995
(73) Patentinhaber: JANKE & KUNKEL GMBH & CO. KG, D-79219 Staufen (DE)
(72) Erfinder: Stiegelmann, René, D-79219 Staufen (DE); König, Hans, D-79426 Buggingen-Seefelden (DE); Dietsche, Rainer, D-79244 Münstertal (DE)
(74) Vertreter: Schmitt, Hans, Dipl.-Ing.

(56) Entgegenhaltungen:
- EP-A- 0 432 813
- WO-A-92/22800
- DE-A- 3 339 656
- DE-A- 4 136 504
- DE-C- 604 997
- FR-A- 2 151 771
- GB-A- 947 762
- US-A- 4 522 310
- US-A- 4 724 844
- US-A- 4 744 309

## Beschreibung

Die Erfindung betrifft ein Laborgerät mit Haltevorrichtung zum Aufnehmen des Laborgerätes oberhalb einer Arbeitsfläche, wobei die Haltevorrichtung an einem Stativ höhenverstellbar und gegebenenfalls um eine vertikale und/oder horizontale Achse, zum Beispiel um Stativstangen, dreh- oder schwenkbar angeordnet ist.

Es ist bereits eine Vielzahl von Geräten mit daran angepaßten Haltevorrichtungen bekannt.

Aus der US-A-4 744 309 ist ein Tisch für zahnärztliche Instrumente bekannt, der mit Hilfe eines um eine vertikale Achse schwenkbaren Armes einer Haltevorrichtung lösbar getragen wird, wobei zwischen dem Haltearm und dem Tisch ein Träger befestigt sein muß, um den Tisch unterstützen und randseitig erfassen zu können.

Es ist ferner aus der Praxis bekannt, Laborgeräte wie zum Beispiel Magnetrührer, oder andere Rührvorrichtungen auf einer an einem Stativ höhenverstellbaren Platte als Haltevorrichtung aufzustellen. Dadurch ist es möglich, das Laborgerät in eine günstige Position zu anderen Geräten zu bringen, beispielsweise in eine günstige Lage gegenüber Beschickungsschläuchen, Meßvorrichtungen oder dergleichen. Auch kann der häufig begrenzte oder beengte Platz in einem Laboratorium und auf den dort vorgesehenen Arbeitsflächen dadurch besser genutzt werden, daß unterschiedliche Höhenlagen für verschiedene Laborgeräte ermöglicht werden. Dabei besteht jedoch die Gefahr, daß das Laborgerät von der als Haltevorrichtung dienenden, an dem Stativ befestigten Platte heruntergestoßen wird und es zu Unfällen kommt.

Es besteht deshalb die Aufgabe, eine Haltevorrichtung der eingangs erwähnten Art zu schaffen, bei welcher ein auch in größerer Höhenlage angeordnetes Laborgerät gegen Herabstoßen oder Herabfallen weitestgehend gesichert ist, dennoch aber das Laborgerät sehr einfach an dieser Haltevorrichtung aufgenommen und von ihr wieder entfernt werden kann.

Die Lösung dieser Aufgabe besteht darin, daß die Haltevorrichtung wenigstens einen Haltearm aufweist, der kürzer als die in seiner Längserstreckung verlaufende Abmessung des Laborgerätes ist und der an seinem freien Ende einen gegenüber seinem Verlauf in Gebrauchsstellung hochstehenden Vorsprung hat, welcher in eine Aussparung des Laborgerätes eingreift und einen Gegenvorsprung des Laborgerätes hintergreift und daß wenigstens ein einen Gerätevorsprung und/oder die Geräteoberseite mit Abstand zu dem Haltearm übergreifender Vorsprung vorgesehen ist, wobei ein breiter oder zwei Haltearme und wenigstens ein übergreifender Vorsprung oder wenigstens ein Haltearm und ein breiter Vorsprung oder zwei übergreifende Vorsprünge an der Haltevorrichtung angeordnet sind.

Da der Haltearm oder die Haltearme kürzer als das Laborgerät sind, ergibt sich gegenüber dem Laborgerät kein unnötig überstehender Rand einer Halteplatte. Der Vorsprung des Haltearmes kann aufgrund seines Eingreifens in eine entsprechende Aussparung an dem Laborgerät für eine formschlüssige Festlegung in horizontaler Richtung sorgen. Der übergreifende Vorsprung verhindert, daß das Laborgerät nach vorne abkippen kann, obwohl der oder die Haltearme kürzer als das Laborgerät sind. Das Laborgerät wird also an etwa drei Punkten, nämlich zwei unteren und einem oberen Punkt oder umgekehrt sicher abgestützt. Dabei kann es sehr einfach in die Haltevorrichtung eingesetzt werden, indem es etwas schräg von oben auf den Haltearm gebracht wird, wobei seine Rückseite unter den übergreifenden Vorsprung geschoben wird und dann die Aussparungen mit den Vorsprüngen der Haltearme in Verbindung gebracht werden können. Schraubverbindungen oder dergleichen sind also nicht erforderlich. Dennoch wird das Laborgerät sicher und funktionsgerecht gehalten. Auch das Abnehmen des Laborgerätes aus der Haltevorrichtung ist entsprechend einfach, weil es lediglich gegenüber den Vorsprüngen der Haltearme hochgekippt und dann unter dem übergreifenden Vorsprung herausgenommen werden muß.

Besonders zweckmäßig ist es dabei, wenn zwei parallele und in Gebrauchsstellung im wesentlichen horizontale Haltearme zum Untergreifen des Laborgerätes insbesondere an dessen beiden Längsrändern vorgesehen sind. Gerade an den Längsrändern können Aussparungen für die Vorsprünge der Haltearme problemlos untergebracht werden, so daß das Laborgerät selbst keine Aussparungen benötigt, die unter Umständen im Inneren des Laborgerätes bei der Anordnung der dort vorhandenen Aggregate berücksichtigt werden müssen.

Der übergreifende Vorsprung kann etwa in der Mitte zwischen den beiden Haltearmen angeordnet sein. Dies führt zu einer günstigen Kraftübertragung und Kraftverteilung.

Der übergreifende Vorsprung kann oberhalb der von den Haltearmen aufgespannten Ebene angeordnet sein und zum Übergreifen eines quer zu den Längsrändern verlaufenden oberen Randes des Gerätes vorgesehen und angeordnet sein. Somit braucht an dem Gerät selbst keine besondere Gegenhalterung für den übergreifenden Vorsprung vorgesehen werden. Der Vorsprung kann einfach an der Oberseite des Gerätes in der beschriebenen Weise angreifen und ein Abkippen des Gerätes über die vorderen Enden der Haltearme verhindern. Durch die Schwerkraft und durch den übergreifenden Vorsprung wird also das Laborgerät auf den Haltearmen auch in vertikaler Richtung so gut fixiert, daß weitere Befestigungselemente, die denkbar wären, gespart werden können.

Die Aussparungen für den Eingriff der Vorsprünge können an den Längsseiten des Laborgerätes als angeordnete Schienen oder als übergreifende Ränder ausgebildet sein. Beispielsweise könnte die Oberseite des Gerätes zumindest an den Längsrändern gegenüber der eigentlichen Längsseite des Gerätes überstehen und einen nach unten gerichteten Flansch haben, der die seitliche Begrenzung der Aussparung für den Eingriff des entsprechenden Haltearmes bildet. Dies ist vor allem deshalb vorteilhaft, weil ein solcher überstehender Rand beziehungsweise eine solche seitliche Schiene noch zum Ankuppeln weiterer Teile wie Haltevorrichtungen oder Stativhalter oder dergleichen dienen kann. Es ergibt sich dann also eine Doppelfunktion, weil an einer solchen Schiene oder dergleichen die Haltearme beim Lagern des Laborgerätes an einem Stativ angreifen können, zusätzlich an dieser Schiene oder dergleichen aber auch eine weitere Haltevorrichtung zum Beispiel für einen weiteren Stativstab, eine Fixierung eines Rührers oder von Meßgeräten angebracht werden kann.

Der Übergang von dem Haltearm zu dem oberen Ende seines Vorsprunges kann als Schräge ausgebildet sein, die von oben zu dem Haltearm hin geneigt ist und als Gleitführung zum Einschieben des Gerätes unter den übergreifenden Vorsprung dient. Dadurch erhält der Haltevorsprung eine Doppelfunktion, weil er beim Einsetzen des Gerätes automatisch für dessen Verschiebung in Längsrichtung der Haltearme unter den übergreifenden Vorsprung sorgt. Die Schräge wirkt also gewissermaßen ähnlich wie eine Zentrierung, indem sie das Laborgerät bei seinem Aufsetzen auf den Haltearm auch in Richtung zu den Enden der Haltearme hin verschiebt, wo es sicher gelagert und von dem übergreifenden Vorsprung gehalten ist. Das untere Ende der Schräge hat also von dem Ende des übergreifenden Vorsprunges den entsprechenden Abstand, den das Gerät selbst zwischen seiner Rückseite und der Aussparung für den Vorsprung des Haltearmes hat.

Die Haltearme und der übergreifende Vorsprung können durch eine gemeinsame Traverse verbunden sein, so daß die Haltevorrichtung gabelförmig ausgebildet ist. Somit ist eine einstückige Haltevorrichtung möglich, die vom Benutzer entsprechend einfach zum Beispiel an einem Stativ angebracht und dort auch in der Höhenlage verstellt werden kann.

An der Traverse kann etwa auf der Höhe des übergreifenden Vorsprunges eine Kupplung zum Verbinden mit dem Stativ vorgesehen sein. Zweckmäßig ist es dabei, wenn an der Traverse als Kupplung eine Gewindebohrung zum Einschrauben eines an dem Stativ angreifenden Gewindebolzens vorgesehen ist. Dies stellt eine besonders einfache Kupplung zwischen Haltevorrichtung und Stativstab dar, die nicht nur einfach gelöst oder hergestellt werden kann, sondern auch genügend große Kräfte überträgt.

Die Gewindebohrung kann in Gebrauchsstellung horizontal verlaufen und in ihrer Verlängerung kann der als Materialverdickung ausgebildete übergreifende Vorsprung angeordnet sein und die Gewindebohrung kann in das Innere des Vorsprunges ragen. Somit kann der Kupplungsbereich eine Doppelfunktion haben, in dem er einerseits den übergreifenden Vorsprung bildet und andererseits genügend Materialanhäufung darstellt, um eine ausreichend große Gewindeöffnung darin vorsehen zu können.

Insgesamt ergibt sich eine Haltevorrichtung, die bevorzugt als Haltegabel gestaltet sein kann und mit welcher Laborgeräte an einem Stativ in größerer Höhe gehalten werden können, welche Laborgeräte eine größere Abmessung als die Haltevorrichtung selbst in Richtung von dem Stativ weg haben können. Die Haltevorrichtung tritt also gegenüber dem von ihr gehaltenen Laborgerät stark zurück und behindert nicht den Zugang zu dem Gerät, ohne daß jedoch die Gefahr besteht, daß das Gerät abkippt, abrutscht oder herunterfällt. Gleichzeitig ist es aber trotzdem leicht an der Haltevorrichtung einzusetzen und auch wieder von ihr abzunehmen.

Nachstehend ist ein Ausführungsbeispiel der Erfindung anhand der Zeichnung näher beschrieben. Es zeigt in zum Teil schematisierter Darstellung:
- Fig.1: eine Rückansicht und
- Fig.2: eine Seitenansicht einer Haltevorrichtung, an welcher ein als Magnetrührer ausgebildetes Laborgerät gehalten ist, wobei dieses Laborgerät strichpunktiert dargestellt ist,
- Fig.3: eine Draufsicht der Haltevorrichtung sowie
- Fig.4: eine Seitenansicht der Haltevorrichtung ohne ein Gerät.

Eine im ganzen mit 1 bezeichnete Haltevorrichtung dient zum Aufnehmen eines Laborgerätes 2 oberhalb einer Arbeitsfläche. Die Haltevorrichtung 1 kann zum Beispiel an einem nicht näher dargestellten Stativ angeordnet und an diesem auch höhenverstellbar sein. Eine noch bessere Anpassung der Anordnung des Laborgerätes 2 mit Hilfe der Haltevorrichtung 1 ergibt sich, wenn dabei auch noch eine Verschwenkung um eine vertikale Achse, zum Beispiel um einen Stativstab möglich ist.

Die Haltevorrichtung 1 weist zwei in Gebrauchsstellung etwa horizontal angeordnete Haltearme 3 auf, die kürzer als die in ihrer Längserstreckung verlaufende Abmessung des Laborgerätes 2 sind. Am freien Ende eines jeden Haltearmes ist ein gegenüber dessen Verlauf in Gebrauchsstellung hochstehender Vorsprung 4 angeordnet, der in eine Aussparung 5 des Laborgerätes 2 eingreift und einen Gegenvorsprung 6 hintergreift. Diese Aussparung 5 mit dem Gegenvorsprung 6 kann dabei beispielsweise an einem seitlichen Schutzrahmen 10 des Laborgerätes 2 angeordnet sein.

An der Haltevorrichtung 1 ist ferner ein in Gebrauchsstellung die Geräteoberseite im Bereich der rückwärtigen Querwand des Laborgerätes 2 übergreifender Vorsprung 7 vorgesehen, so daß also im Ausführungsbeispiel zwei Haltearme 3 und ein übergreifender Vorsprung 7 kombiniert sind, um das Laborgerät 2 formschlüssig festzulegen, ohne es mit Verschraubungen oder dergleichen fixieren zu müssen. Die Befestigung des Laborgerätes 2, beispielsweise eines Magnetrührers, wird also über zwei formschlüssig angreifende Haltearme 3 mit Nasen oder hochstehenden Vorsprüngen 4 und einem übergreifenden Vorsprung 7 oder einer Haltenase erreicht. Diese Haltenase beziehungsweise der übergreifende Vorsprung 7 verhindert dabei ein Kippen des Gerätes 2 nach vorne, obwohl die Haltearme 3 kürzer als die Längsseiten dieses Gerätes 2 sind, selbst wenn auf dem Gerät ein Gefäß mit einem zu rührenden Medium steht.

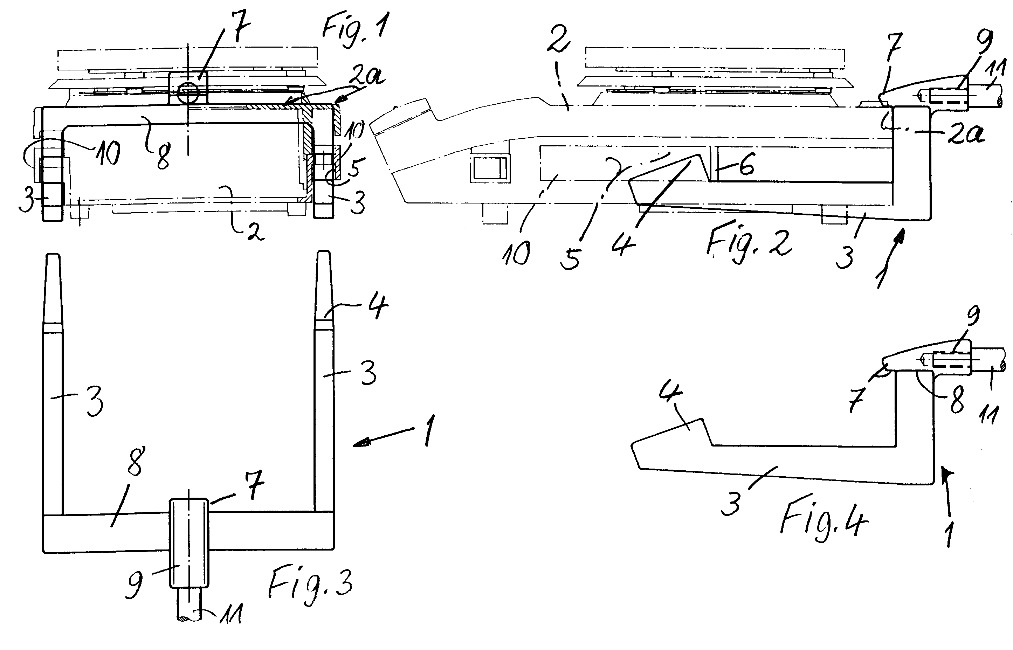

Anhand der Fig.3 erkennt man, daß zwei parallele Haltearme 3 zum Untergreifen der beiden äußeren Längsseiten des Laborgerätes 2 vorgesehen sind, während der übergreifende Vorsprung 7 etwa in der Mitte zwischen den beiden Haltearmen 3 angeordnet ist. Dabei befindet sich gemäß Fig.1, 2 u. 4 dieser übergreifende Vorsprung 7 oberhalb der von den Haltearmen 3 beziehungsweise deren Oberseite aufgespannten Ebene. Er übergreift einen quer zu den Längsrändern verlaufenden oberen Rand 2a an der Rückseite des Laborgerätes 2.

Die schon erwähnten Aussparungen 5 an den Längsseiten des Laborgerätes 2 für den Eingriff der Haltearme 3 beziehungsweise der daran hochstehenden Nasen oder Vorsprünge 4 sind als an den Längsseiten des Laborgerätes 2 angeordnete Schienen oder Schutzrahmen 10 ausgebildet. Ein solcher Schutzrahmen kann als Berührschutz dienen und zweckmäßig sein, wenn das Laborgerät mit einer Heizvorrichtung versehen ist. Ein solcher Schutzrahmen mit entsprechenden schienenartigen Rahmenteilen kann auf diese Weise eine Zusatzfunktion haben, weil er dann das Anordnen an der Haltevorrichtung 1 ermöglicht.

Der Übergang von dem Haltearm 3 zu dem oberen Ende des Vorsprunges 4 ist im Ausführungsbeispiel jeweils als Schräge ausgebildet, die von oben zu dem Haltearm 3 beziehungsweise dessen Oberseite hin geneigt ist und als Gleitführung zum Einschieben des Gerätes 2 unter den übergreifenden Vorsprung 7 dient. Die abgeschrägten Flächen der Vorsprünge 4 am vorderen Ende der Haltearme 3 verhindern also nicht nur, daß das Gerät nach vorne wegrutscht und aus der Halterung fallen könnte, sondern dienen gleichzeitig als Einführhilfe. Wird das Laborgerät 2 auf die Haltearme 3 aufgelegt und nach hinten verschoben, wird es zunächst vorne zwangsläufig von den Haltenasen oder Vorsprüngen 4 angehoben und dann durch deren schrägen Übergang unter den übergreifenden Vorsprung 7 geführt. Beim Entnehmen des Gerätes 2 geschieht dies in umgekehrter Reihenfolge, das heißt, das Gerät 2 muß zum Entnehmen vorne angehoben werden. Es muß also entgegen der Schwerkraft bewegt werden, das heißt in Gebrauchsstellung wird es durch die genannten Vorsprünge und die Schwerkraft sicher gehalten.

Die Haltearme 3 und der übergreifende Vorsprung 7 sind von einer gemeinsamen Traverse 8 verbunden, so daß die Haltevorrichtung 1 insgesamt gabelförmig geformt ist. Es ist also eine Haltegabel gebildet, die selbst relativ wenig Gewicht hat, aber die Gewichtskräfte des Laborgerätes 2 gut aufnehmen kann.

An der Traverse 8 ist auf der Höhe des übergreifenden Vorsprunges 7 eine Kupplung 9 zum Verbinden mit dem Stativ vorgesehen, die im Ausführungsbeispiel als Gewindebohrung zum Einschrauben eines an dem Stativ anbringbaren Gewindebolzens 11 ausgebildet ist. Dabei erkennt man in Fig.2 und 3 deutlich, daß die Gewindebohrung in Gebrauchsstellung horizontal verläuft und in ihrer Verlängerung der als Materialverdickung ausgebildete übergreifende Vorsprung 7 angeordnet ist, wobei die Gewindebohrung in das Innere dieses Vorsprunges 7 ragt. Der übergreifende Vorsprung 7 und die Kupplung 9 werden also gemeinsam ausgebildet und die von dem Vorsprung 7 aufgenommene Kraft kann entsprechend direkt in den Bolzen 11 und somit das Stativ eingeleitet werden.

Die Haltevorrichtung 1 zum Aufnehmen eines Laborgerätes 2, welches seitlich einen Schutzrahmen oder schienenartige Vorsprünge hat, ist bevorzugt als Haltegabel mit zwei parallelen Haltearmen 3 ausgebildet, wobei die Haltearme 3 an ihrem Ende hochstehende Vorsprünge 4 zum Eingreifen in die seitlichen Schienen des Laborgerätes 2 oder sonstige Aussparungen haben. Darüber hinaus wird mit Abstand zu diesen Vorsprüngen 4 das Laborgerät 2 von einem zu der Haltevorrichtung 1 gehörenden übergreifenden Vorsprung 7 übergriffen, so daß das Laborgerät 2 nicht von der Haltevorrichtung 1 rutschen oder abkippen kann. Besondere Halteschrauben oder dergleichen aufwendig zu betätigende Befestigungsmittel sind nicht erforderlich und trotzdem ist das Laborgerät 2 sicher festgelegt, kann aber auch auf sehr einfache Weise von der Haltevorrichtung 1 abgenommen werden.

## Patentansprüche

1. Laborgerät (2) mit Haltevorrichtung (1) zum Aufnehmen des Laborgerätes (2) oberhalb einer Arbeitsfläche, wobei die Haltevorrichtung (1) an einem Stativ höhenverstellbar und gegebenenfalls um eine vertikale und/oder horizontale Achse, zum Beispiel um Stativstangen, dreh- oder schwenkbar angeordnet ist, **dadurch gekennzeichnet,** daß die Haltevorrichtung (1) wenigstens einen Haltearm (3) aufweist, der kürzer als die in seiner Längserstreckung verlaufende Abmessung des Laborgerätes (2) ist und der an seinem freien Ende einen gegenüber seinem Verlauf in Gebrauchsstellung hochstehenden Vorsprung (4) hat, welcher in eine Aussparung (5) des Laborgerätes (2) eingreift und einen Gegenvorsprung (6) des Laborgerätes (2) hintergreift und daß wenigstens ein einen Gerätevorsprung und/oder die Geräteoberseite mit Abstand zu dem Haltearm (3) übergreifender Vorsprung (7) vorgesehen ist, wobei ein breiter oder zwei Haltearme (3) und wenigstens ein übergreifender Vorsprung (7) oder wenigstens ein Haltearm (3) und ein breiter Vorsprung (7) oder zwei übergreifende Vorsprünge (7) an der Haltevorrichtung (1) angeordnet sind.

2. Laborgerät mit Haltevorrichtung nach Anspruch 1, dadurch gekennzeichnet, daß zwei parallele und in Gebrauchsstellung im wesentlichen horizontale Haltearme (3) zum Untergreifen des Laborgerätes (2) insbesondere an dessen beiden Längsrändern vorgesehen sind.

3. Laborgerät mit Haltevorrichtung nach Anspruch 1 oder 2, dadurch gekennzeichnet, daß der übergreifende Vorsprung (7) etwa in der Mitte zwischen den beiden Haltearmen (3) angeordnet ist.

4. Laborgerät mit Haltevorrichtung nach einem der Ansprüche 1 bis 3, dadurch gekennzeichnet, daß der übergreifende Vorsprung (7) oberhalb der von den Haltearmen (3) aufgespannten Ebene angeordnet ist und zum Übergreifen eines quer zu den Längsrändern verlaufenden oberen Randes des Laborgerätes (2) dient.

5. Laborgerät mit Haltevorrichtung nach einem der Ansprüche 1 bis 4, dadurch gekennzeichnet, daß die Aussparungen (5) für den Eingriff der Vorsprünge (4) als an den Längsseiten des Laborgerätes (2) angeordnete Schienen oder als übergreifende Ränder ausgebildet sind.

6. Laborgerät mit Haltevorrichtung nach einem der Ansprüche 1 bis 5, dadurch gekennzeichnet, daß der Übergang von dem Haltearm (3) zu dem oberen Ende des Vorsprunges (4) als Schräge ausgebildet ist, die von oben zu dem Haltearm (3) hin geneigt ist und als Gleitführung zum Einschieben des Gerätes (2) unter den übergreifenden Vorsprung (7) dient.

7. Laborgerät mit Haltevorrichtung nach einem der Ansprüche 1 bis 6, dadurch gekennzeichnet, daß die Haltearme (3) und der übergreifende Vorsprung (7) durch eine gemeinsame Traverse (8) verbunden sind, so daß die Haltevorrichtung (1) gabelförmig ausgebildet ist.

8. Laborgerät mit Haltevorrichtung nach Anspruch 7, dadurch gekennzeichnet, daß an der Traverse (8) etwa auf der Höhe des übergreifenden Vorsprunges (7) eine Kupplung (9) zum Verbinden mit dem Stativ vorgesehen ist.

9. Laborgerät mit Haltevorrichtung nach Anspruch 8, dadurch gekennzeichnet, daß an der Traverse (8) als Kupplung (9) eine Gewindebohrung zum Einschrauben eines an dem Stativ angreifenden Gebindebolzens (11) vorgesehen ist

10. Laborgerät mit Haltevorrichtung nach Anspruch 9, dadurch gekennzeichnet, daß die Gewindebohrung in Gebrauchsstellung horizontal verläuft und ihrer Verlängerung der als Materialverdickung ausgebildete übergreifende Vorsprung (7) angeordnet ist und daß die Gewindebohrung in das Innere des Vorsprunges (7) ragt.

## Claims

1. A laboratory apparatus (2) with holding device (1) for accommodating the laboratory apparatus (2) above a working surface, the holding device (1) being arranged on a stand so as to be vertically adjustable and optionally capable of rotating or swivelling about a vertical and/or horizontal axis, for example about stand rods, **characterized in that** the holding device (1) has at least one holding arm (3) shorter than the dimension the laboratory apparatus (2) has in the longitudinal extent of the arm, said holding arm having at its free end a projection (4) prominent of the course the arm takes in a working position, said projection engaging a recess (5) of the laboratory apparatus (2) and gripping behind a counter-projection (6) of the laboratory apparatus (2), and that spaced from the holding arm (3) at least one projection (7) is provided overlapping a projection of the apparatus and/or the top side of the apparatus, whereby one wide or two holding arms (3) and at least one overlapping projection (7), or at least one holding arm (3) and one wide projection (7) or two overlapping projections (7) are arranged on the holding device (1).

2. A laboratory apparatus with holding device as claimed in claim 1, characterized in that two parallel holding arms (3) which are substantially horizontal in the working position are provided for gripping under the laboratory apparatus (2), particularly at two longitudinal edges thereof.

3. A laboratory apparatus with holding device as claimed in claim 1 or claim 2, characterized in that the overlapping projection (7) is located approximately in the middle between the two holding arms (3).

4. A laboratory apparatus with holding device as claimed in any one of claims 1 to 3, characterized in that the overlapping projection (7) is arranged above the plane spanned by the holding arms (3) and serves to overlap an upper edge of the laboratory apparatus (2) that runs crosswise to the longitudinal edges.

5. A laboratory apparatus with holding device as claimed in any one of claims 1 to 4, characterized in that the recesses (5) for the engagement of the projections (4) take the form of rails arranged at the longitudinal sides of the laboratory apparatus (2) or take the form of overlapping edges.

6. A laboratory apparatus with holding device as claimed in any one of claims 1 to 5, characterized in that the transition from the holding arm (3) to the upper end of the projection (4) is configured as a slope that is inclined from the top towards the holding arm (3) and serves as a sliding guide for the insertion of the apparatus (2) beneath the overlapping projection (7).

7. A laboratory apparatus with holding device as claimed in any one of claims 1 to 6, characterized in that the holding arms (3) and the overlapping projection (7) are joined by a common cross arm (8) to give the holding device (1) a fork-like shape.

8. A laboratory apparatus with holding device as claimed in claim 7, characterized in that on the cross bar (8), approximately at the height of the overlapping projection (7), a coupling (9) is provided for connection to the stand.

9. A laboratory apparatus with holding device as claimed in claim 8, characterized in that the cross bar (8) is provided with a coupling (9) in the form of a tapped hole for screwing in a threaded bolt (11) that engages with the stand.

10. A laboratory apparatus with holding device as claimed in claim 9, characterized in that the tapped hole extends horizontally in the working position and arranged in extension of the tapped hole there is the overlapping projection (7) in the form of a thickening of material and that the tapped hole penetrates into the interior of the projection (7).

## Revendications

1. Appareil de laboratoire (2) avec dispositif support (1), destiné à supporter l'appareil de laboratoire (2) en une position se trouvant au-dessus d'une surface de travail, le dispositif support (2) étant réglable en hauteur sur un pied et, étant le cas échéant, susceptible de pouvoir tourner ou pivoter autour d'un axe vertical et/ou horizontal, par exemple autour de barres de pied, caractérisé en ce que le dispositif support (1) présente au moins un bras support (3) d'une longueur inférieure à celle de la longueur de l'appareil de laboratoire (2) et ayant, à son extrémité libre, une saillie (4) se projetant vers le haut, par rapport à son allure lorsqu'il est en position d'utilisation, saillie s'engageant dans un évidement (5) de l'appareil de laboratoire et saisissant par l'arrière une saillie conjuguée (6) de l'appareil de laboratoire (2), et en ce qu'est prévue au moins une saillie (7), saisissant par le dessus une saillie formée sur l'appareil et/ou la face supérieure de l'appareil, avec un espacement par rapport au bras support (3), un bras support (3) large ou deux bras support et au moins une saillie (7) saisissant par le dessus au moins un bras support (3) et une saillie (7) large ou deux saillies (7) saisissant par le dessus étant disposés sur le dispositif support (1).

2. Appareil de laboratoire équipé d'un dispositif support selon la revendication 1, caractérisé en ce que deux bras support (3), parallèles et sensiblement horizontaux, lorsqu'ils sont en position d'utilisation, sont prévus pour saisir par le dessous l'appareil de laboratoire (2), en particulier sur ses deux bords longitudinaux.

3. Appareil de laboratoire équipé d'un dispositif support selon la revendication 1 ou 2, caractérisé en ce que la saillie (7) saisissant par le dessus est disposée à peu près au centre, entre les deux bras support (3).

4. Appareil de laboratoire équipé d'un dispositif support selon l'une des revendications 1 à 3, caractérisé en ce que la saillie (7) saisissant par le dessus est disposée au-dessus du plan défini par les bras support (3) et sert à saisir par le dessus un bord supérieur, s'étendant transversalement par rapport aux bords longitudinaux, de l'appareil de laboratoire (2).

5. Appareil de laboratoire équipé d'un dispositif support selon l'une des revendications 1 à 4, caractérisé en ce que les évidements (5) destinés à l'engagement des saillies (4) sont réalisés sous forme de glissières disposées sur les côtés longitudinaux de l'appareil de laboratoire (2), ou bien de bords à effet de saisie par le dessus.

6. Appareil de laboratoire équipé d'un dispositif support selon l'une des revendications 1 à 5, caractérisé en ce que la transition entre le bras support et l'extrémité supérieure de la saisie (4) est réalisée sous forme de pente inclinée du haut vers le bras support (3) et servant de guidage coulissant pour l'introduction de l'appareil (2) sous la saillie (4) à effet de saisie par le dessus.

7. Appareil de laboratoire équipé d'un dispositif support selon l'une des revendications 1 à 6, caractérisé en ce que les bras support (3) et la saillie (7) à saisie par le dessus sont reliés par une traverse (8) commune, de manière que le dispositif support (1) ait une forme de fourche.

8. Appareil de laboratoire équipé d'un dispositif support selon la revendication 7, caractérisé en ce que sur la traverse (8) est prévu, à peu près au niveau de la saillie (7) à saisie par le dessus, un couplage (9) destiné à assurer la liaison aux pieds.

9. Appareil de laboratoire équipé d'un dispositif support selon la revendication 8, caractérisé en ce qu'un trou taraudé, destiné à introduire par vissage un boulon de liaison (11) s'engageant sur le pied, est prévu sur la traverse (8), à titre de couplage (9).

10. Appareil de laboratoire équipé d'un dispositif support selon la revendication 9, caractérisé en ce que le trou taraudé s'étend horizontalement en position d'utilisation, et la saillie (7) à saisie par le dessus est réalisée dans son prolongement, sous forme d'épaississement du matériau, et en ce que le trou taraudé pénètre à l'intérieur de la saillie (7).
